Europäisches Patentamt

European Patent Office

Office européen des brevets

(19)

(11) Numéro de publication : **0 430 782 A1**

(12)

# DEMANDE DE BREVET EUROPEEN

(21) Numéro de dépôt : **90403324.8**

(51) Int. Cl.⁵ : **G06F 15/80**

(22) Date de dépôt : **23.11.90**

(30) Priorité : **01.12.89 FR 8915873**

(43) Date de publication de la demande :
**05.06.91 Bulletin 91/23**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Refregier, Philippe,**
**THOMSON-CSF**
**SCPI-CEDEX 67**
**F-92045 Paris la Defense (FR)**
Inventeur : **Vignolle, Jean-Michel,**
**THOMSON-CSF**
**SCPI-CEDEX 67**
**F-92045 Paris la Defense (FR)**

(74) Mandataire : **Chaverneff, Vladimir et al**
**THOMSON-CSF SCPI**
**F-92045 PARIS LA DEFENSE CEDEX 67 (FR)**

(54) **Dispositif de multiplication matricielle, et application aux réseaux de neurones.**

(57)  Le dispositif de multiplication de l'invention répartit les poids du vecteur d'entrée ($W_{ji}^{(0)}$ ... $W_{ji}^{(4)}$) sur plusieurs lignes d'entrée ($e_i$), les multiplieurs (M1, M2, ...) étant disposés sur ces lignes.

FIG.3

## DISPOSITIF DE MULTIPLICATION MATRICIELLE ET APPLICATION AUX RESEAUX DE NEURONES

La présente invention se rapporte à un dispositif réalisant une multiplication matricielle sur plusieurs bits à partir de composants binaires, à son application aux réseaux de neurones, et à un procédé de multiplication matricielle.

Les algorithmes neuronaux mettent en jeu des produits de vecteurs par des matrices qui, pour des systèmes possédant un grand nombre de neurones, nécessitent des processeurs spécialisés. La présente demande se rapporte en particulier au cas des processeurs analogiques.

On connaît différents algorithmes (on se référera par exemple à "Performance limits of optical, electro-optical and electronics neuro-computers" R. Hecht Nielson, SPIE, Vol. 634, Optical and Hybrid Computing (1986), page 277 et à "An introduction to computing with neural nets", Lippman, IEEE ASSP April 1987. Le point commun à tous ces algorithmes est la nécessité de réaliser des produits de vecteurs par des matrices dont les éléments sont appelés poids synaptiques ou simplement poids. Si on note $e_i$ ($i = 1...N_1$) les $N_1$ coordonnées du vecteur d'entrée et $S_j$ ($j = 1...N_2$) celles du vecteur de sortie, l'opération matricielle à effectuer s'écrit :

$$(1) \qquad S_j = \sum_{i=1}^{N-1} W_{ji} \, e_i \quad (j=1...N)$$

où les $W_{ji}$ représentent les poids de la matrice.

Quand les tailles des vecteurs d'entrée et de sortie deviennent importantes (par exemple : $N_1 = N_2 = 10^3$) deux problèmes peuvent apparaître avec l'opération (1) :

1°/ Quand l'exécution est séquentielle, le temps de calcul peut devenir prohibitif pour certaines applications (car il faut réaliser $N_1 \times N_2$ multiplications).

2°/ Le nombre de poids $W_{ji}$ (égal à $N_1 \times N_2$) nécessite une mémoire importante et les temps d'accès mémoire peuvent également faire chuter les capacités du système (en temps de calcul et/ou en volume).

Une solution pour pallier ces inconvénients consiste à réaliser le produit (vecteur.matrice) de la relation (1) de façon analogique.

On peut citer, comme exemples non limitatifs de telles réalisations analogiques de produits vecteur-matrice, des modes de réalisation utilisant des dispositifs :

- optiques : les poids sont réalisés à l'aide d'hologrammes ("Multilayer optical learning networks", Kelvin Wagner and Demetri Psaltis, page 5061).

- optoélectroniques : la structure de base est celle d'un multiplieur vecteur matrice optique, les poids étant réalisés avec des masques de différentes transparences ou de différents indices optiques, ou à rotation de polarisation incidente par le matériau - simplement transparent/opaque dans de nombreux cas - ("Optoelectronic analogs of self-programming neural nets : architecture and methodologies for implementing fast stochastic learning by simulated annealing", Nabil H. Farhat, page 5093).

- électroniques : les poids peuvent être des résistances ou des structures plus complexes, à base de transistors par exemple ("VLSI architecture for implementation of neural networks", Massimo A. Sivilotti, Michael R. Emerling and Carver A. Mead, AIP Conf. Proc. 151, 1986),

- pyroélectriques : les poids sont réalisés par des systèmes bistables de type ferroélectrique (cf. Demande de Brevet français 87 13961).

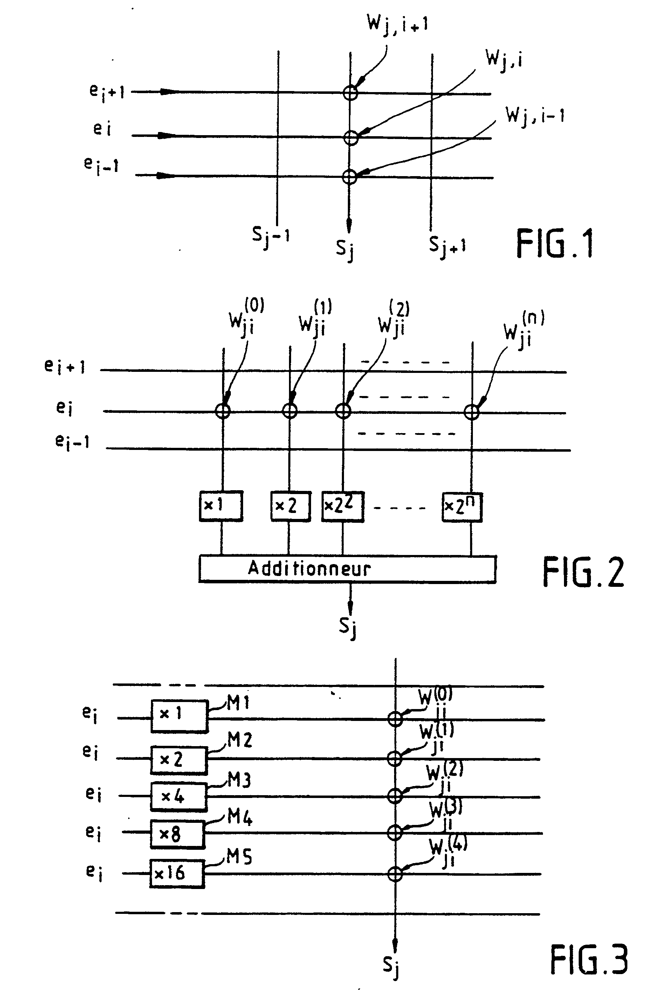

On ne détaillera pas ici ces différentes architectures, chacun de ces cas pouvant être représenté par le schéma de principe de la figure 1. Sur ce schéma, les différentes entrées de la matrices sont notées ...$e_{i-1}$, $e_i$, $e_{i+1}$, ..., et les synapses d'une même colonne $S_j$ : ... $W_{j,i-1}$, $W_{j,i}$, $W_{j,i+1}$ ...

Le principe commun à tous ces systèmes consiste à réaliser les $N_1.N_2$ multiplications en parallèle directement sur l'élément mémoire (masque ou hologramme dans le cas optique, résistance électrique dans le cas électronique, matrice ferroélectrique dans le cas pyroélectrique ...). On résout ainsi les deux principaux problèmes signalés précédemment :

a) le temps de calcul est fortement réduit en réalisant les opérations en parallèle,

b) il n'y a plus de temps d'accès mémoire puisque l'opération est directement réalisée sur cet élément mémoire et ceci en parallèle.

Cependant, dans la plupart des systèmes analogiques, les informations (les poids) sont stockées sous forme binaire (ou avec un nombre très limité de niveaux différents). Ceci peut être dû à la difficulté de maîtriser les éléments analogiques qui réalisent les poids (résistances, masque, etc..), cette difficulté augmentant avec le nombre de poids à stocker. Pour certains systèmes analogiques, le mécanisme permettant de stocker les poids peut être de nature bistable (ferroélectrique), ce qui entraîne ainsi un enregistrement des poids sous forme binaire.

La solution généralement adoptée pour travailler avec des poids non binaires consiste à enregistrer ces derniers sous la forme d'un mot binaire (donc réparti sur plusieurs cases mémoires). Plus précisément le poids est écrit sous la forme :

$$W_{ji} = W_{ji}(0) + W_{ji}(1)2' + ... + W_{ji}(n)2n$$

et on réalise un système dont le schéma de principe est représenté en figure 2. Sur ce schéma, les différentes entrées (lignes) de la matrice sont notées comme en figure 1. Les synapses d'une même ligne, par exemple $e_i$, sont notés : $...W_{ji}(0)$, $W_{ji}(1)...W_{ji}(n)$.

Chacune des colonnes est reliée à un multiplieur réalisant la multiplication par $2°$, $2^1$, ... $2^n$ pour les colonnes 0 à n. Les différents multiplieurs sont reliés à un additionneur A, dont la sortie est notée $S_j$.

Le principe de cette solution consiste donc à utiliser plusieurs lignes de sortie pour effectuer les différentes multiplications binaires et à multiplier à la sortie de chaque ligne le résultat par le coefficient $2^P$ (P = 0 à n) adéquat.

Une première limitation de ce type d'approche est liée aux structures de matrice que l'on peut ainsi obtenir.

En effet, si la matrice binaire (correspondant au composant) est une matrice carrée N par N et si les poids de la matrice "mathématique" sont codés sur n bits, alors les matrices mathématiques qui pourront être simulées correspondront (au plus) à des matrices rectangulaires N par N/n.

Un deuxième inconvénient de cette approche est le mauvais rapport signal sur bruit qui peut résulter d'une amplification faite après la mesure des résultats partiels.

La présente invention a pour objet un dispositif analogique de multiplication matricielle pour réseaux neuronaux qui puisse opérer avec des matrices de grandes dimensions, rapidement, et avec un bon rapport signal/bruit. L'invention a également pour objet un dispositif analogique de multiplication matricielle pour réseaux neuronaux qui puisse être adapté facilement à des matrices de dimensions différentes, en particulier des matrices non "carrées" (nombre d"entrées différent du nombre de sorties).

Le dispositif analogique de multiplication matricielle pour réseaux neuronaux conforme à l'invention, du type à poids enregistrés sous forme de q valeurs discrètes comporte pour chaque composante du vecteur d'entrée, m (m ≦n) lignes d'entrée recevant chacune la même composante de ce vecteur, ces m lignes comportant chacune un multiplieur par $q^P$, p valant respectivement 0 à m - 1. Le multiplieur est un multiplieur du signal de commande et ce signal de commande est un courant ou une tension électrique ou un signal optique. Le multiplieur peut être du type en tension à multiplication par récurrence d'impulsions.

L'invention sera mieux comprise à la lecture de la description détaillée de plusieurs modes de réalisation pris à titre d'exemples non limitatifs et illustrés par le dessin annexé, sur lequel :
- la figure 1 est un schéma de principe partiel, cité ci-dessus, d'une matrice de multiplication analogique de l'art antérieur,
- la figure 2 citée ci-dessus, est le schéma de principe partiel d'une matrice connue de multiplication analogique à poids non binaires enregistrés sous forme d'un mot binaire,
- les figure 3 et 4 sont des schémas de principe partiels de matrices de multiplication analogique conformes à l'invention, et
- la figure 5 est le schéma de principe partiel dune matrice de multiplication analogique, conforme à l'invention pour des vecteurs d'entrée binaires.

Sur le schéma de principe de la figure 3, on n'a représenté qu'une colonne $S_j$, et, pour le vecteur $e_i$, trois lignes d'entrée comportant respectivement les multiplieurs analogiques M1 à M5 réalisant respectivement la multiplication par 1, 2, 4, 8 et 16 ($2°$ à $2^4$). Les poids synaptiques correspondants sont $W_{ji}(0)$, $W_{ji}(1)$, $W_{ji}(2)$, $W_{ji}(3)$ et $W_{ji}(4)$.

La décomposition du poids $W_{ji}$ est la même que dans le cas de la figure 2.

D'un point de vue plus formel, la solution connue de la figure 2 revient à décomposer l'opération (1) sous la forme :

$$S_j = \sum_{i=1}^{N} W_{ji} e_i = \sum_{p=1}^{N} 2^P \left( \sum_i W_{ji}^{(P)} e_i \right).$$

où $W_{ji}$ est binaire, chaque ligne de sortie permettant d'obtenir :

l'addition $\sum_{P} 2^P (\sum_{i} W_{ji}^{(P)} e_i)$ étant ensuite réalisée.

$\sum_{i} W_{ji}^{(P)} e_i$ pour une valeur de p donnée,

La solution de l'invention décompose l'opération (1) de la façon suivante :

$$S_j = \sum_{i=1}^{N} \sum_{P=1}^{N} [W_{ji}^{(P)} (2^P \cdot e_i)].$$

où en amont de chaque ligne d'entrée (multiplieurs M1 à M5), l'opération de pondération $2^P e_i$ est réalisée, les additions étant ensuite faites de manière analogique sur $S_j$.

La méthode de l'invention présente, a priori, un meilleur rapport signal sur bruit car l'amplification (c'est-à-dire la multiplication par les coefficients $2^P$) est faite en amont du système contrairement à la solution de la figure 2.

Le second avantage de cette méthode réside dans la plus grande liberté sur la forme des matrices "mathématiques" qu'on peut implanter. En effet, en combinant les solutions de la figure 2 et de l'invention, on peut, par exemple, simuler des matrices "mathématiques" carrées à partir de composants binaires correspondant également à des matrices carrées.

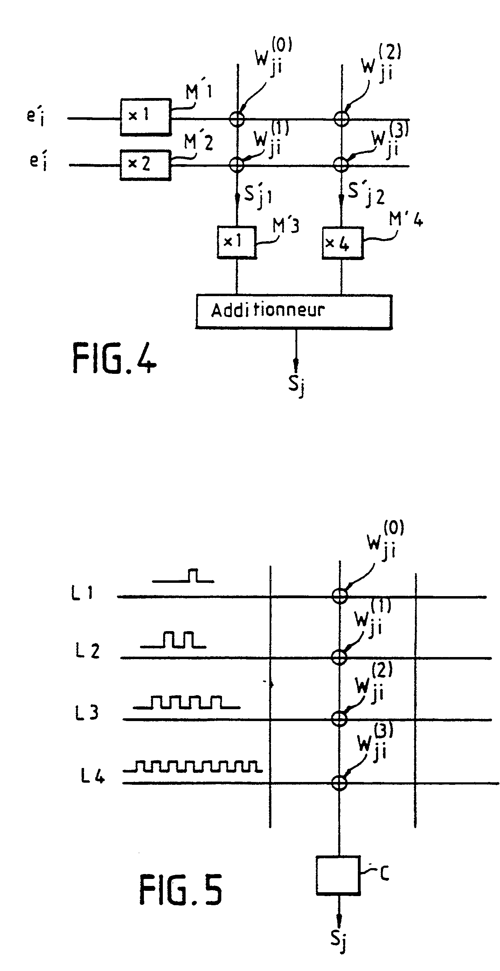

On va illustrer cet aspect à l'aide de l'exemple simplifié de la figure 4. Cet exemple réalise la multiplication $W'_{ij} e_i$, avec $W'_{ji} = W'_{ji}^{(0)} + 2 W'_{ji}^{(1)} + 4 w'_{ji}^{(2)} + 8 W'_{ji}^{(3)}$. Le vecteur d'entrée e'i est envoyé à deux lignes d'entrée à l'entrée desquelles on dispose respectivement les multiplieurs M'1 et M'2. A ces deux lignes correspondent deux colonnes $S'_j$ 1 et $S'_j$ 2 (pour pouvoir effectuer les quatre multiplications par $W'_{ji}^{(0)}$ à $W'_{ji}^{(3)}$). Sur les lignes de sortie $S'_j$ 1 et $S'_j$ 2, on dispose respectivement les multiplieurs M'3 et M'4. Les sorties des multiplieurs M'3 et M'4 sont reliées à un additionneur A' dont la sortie constitue la sortie du dispositif de multiplication matricielle simplifié de la figure 4.

Les coefficients de multiplication des multiplieurs M'1 à M'4 sont déterminés pour obtenir les quatre coefficients de pondération désirés, à savoir, 1, 2, 4 et 8. On choisit par exemple les coefficients 1, 2, 1 et 4 pour M'1 à M'4 respectivement. On obtient ainsi, à la sortie de M'3, les coefficients de pondération 1 et 2 ($1 \times 1$ et $1 \times 2$) et à la sortie de M'4 les coefficients de pondération 4 et 8 ($4 \times 1$ et $4 \times 2$), ce qui fait que tous les coefficients de pondération sont présents, et eux seuls, sans redondance.

Ainsi, on peut réaliser avec un même composant des matrices dont le nombre de lignes est différent du nombre de colonnes dans une grande fourchette de valeurs. On prend par exemple un composant analogique qui permet d'implanter $10^6$ poids binaires sous la forme d'une matrice carrée ($10^3$ entrées, $10^3$ sorties). On souhaite réaliser l'opération matricielle (1) avec des poids codés sur 16 bits.

La solution de l'art antérieur de la figure 2 ne permet de simuler que des matrices "mathématiques" dont la taille est au plus de 1000 entrées par 62 sorties.

En combinant la solution de l'invention avec la solution de la figure 2 on peut réaliser les matrices mathé-matiques suivantes :

62 entrées par 1000 sorties $\}$ invention seule

125 entrées par 500 sorties $\}$ combinaison de

250 entrées par 250 sorties $\}$ l'invention et de l'art

500 entrées par 125 sorties $\}$ antérieur

Il faut remarquer que la méthode proposée peut également être adaptée aux cas où les poids peuvent être enregistrés avec un nombre fini de valeurs supérieures à 2. Ceci constitue une généralisation immédiate de ce qui vient d'être exposé. On va illustrer une telle méthode générale à l'aide d'un exemple.

On suppose que les poids puissent prendre une des trois valeurs (-1, 0, 1) et que l'on souhaite simuler des poids prenant toute valeur entière entre -4 et 4. La méthode proposée consiste à multiplier par 2 le nombre des lignes d'entrée et à appliquer un facteur multiplicatif 3 sur une de ces deux lignes.

Quand la technologie mise en jeu est numérique et que, par conséquent elle admet des signaux d'entrée ne prenant que des valeurs binaires, on peut appliquer la méthode de l'invention en considérant que la grandeur analogique en entrée est le nombre de répétitions du bit d'entrée couplé avec un additionneur ou un compteur en sortie. On peut simuler des opérations avec des poids non binaires en n'effectuant que des opérations binaires.

Le schéma de principe simplifié est celui représenté en figure 5.

Sur ce schéma, on a seulement tenu compte d'un vecteur dont une composante d'entrée est $e_i = +1$, le poids $W_{ji}$ se décomposant en $W_{ji}^{(0)} + W_{ji}^{(1)} + W_{ji}^{(2)} + W_{ji}^{(3)}$.

La composante de vecteur $e_i$ est envoyée sur quatre lignes d'entrée L1 à L4, puisqu'on suppose que le poids comporte quatre bits. Cette composante étant supposée ne comporter qu'un bit (une impulsion), la multiplication d'entrée conforme à l'invention consiste à répéter $2^P$ fois cette impulsion, avec $P = 1... n - 1$.

Ainsi, sur L1, on n'a qu'une seule impulsion ($P = 1$), sur L2 on double l'impulsion ($P = 2$), sur L3 on a quatre impulsions et sur L4 on a huit impulsions.

Aux croisements des lignes L1 à L4 et de la colonne $S_j$, par exemple, on dispose les synapses (par exemple des portes logiques) correspondant aux composantes $W_{ji}^{(0)}$ à $W_{ji}^{(3)}$. A la sortie de la colonne C, on relie un dispositif additionneur, qui est dans le cas présent un compteur d'impulsions C.

## Revendications

1. Dispositif analogique de multiplication matricielle pour réseaux neuronaux, du type à poids ($W_{ji}$) enregistrés sous forme de q valeurs discrètes ($W_{ji}^0$ à $W_{ji}^N$), caractérisé par le fait qu'il comporte, pour chaque composante du vecteur d'entrée ($e_i$), m ($m \leq n$) lignes d'entrée recevant la même composante de ce vecteur, ces m lignes comportant chacune un multiplieur d'entrée (M1 à M3) par $q^P$, p valant respectivement 0 à m - 1.

2. Dispositif selon la revendication 1, caractérisé par le fait que les valeurs discrètes sont des bits.

3. Dispositif selon la revendication 1, caractérisé par le fait que chaque multiplieur fonctionne en multiplieur du signal de commande.

4. Dispositif selon la revendication 3, caractérisé par le fait que le signal de commande est une tension électrique.

5. Dispositif selon la revendication 3, caractérisé par le fait que le signal de commande est un courant électrique.

6. Dispositif selon la revendication 3, caractérisé par le fait que le signal de commande est un signal optique.

7. Dispositif selon la revendication 1, caractérisé par le fait que chaque multiplieur fonctionne en multiplieur par récurrence (figure 5).

8. Dispositif selon l'une des revendications précédentes, caractérisé par le fait qu'il comporte en outre des multiplieurs sur les sorties de la matrice.

FIG.1

FIG.2

FIG.3

FIG.4

FIG.5

Office européen
des brevets

.RAPPORT DE RECHERCHE EUROPEENNE

Numero de la demande

EP  90 40 3324

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PROCEEDINGS OF THE IEEE 1988 CUSTOM INTEGRATED CIRCUITS CONFERENCE, Rochester, New York, 16-19 mai 1988, pages 1011-1017, IEEE, New York, US; J.I. RAFFEL: "Electronic implementation of neuromorphic systems" * Figures 2,3; page 10.1.2, colonne de gauche, ligne 33 - page 10.1.3, colonne de droite, ligne 5 * | 1-5 | G 06 F   15/80 |
| Y | IDEM | 6,7 | |
| A | IDEM | 8 | |
| X | PROCEEDINGS OF THE IEEE FIRST INTERNATIONAL CONFERENCE ON NEURAL NETWORKS, San Diego, CA, 21-24 juin 1987, pages III-501/514; J. RAFFEL et al: "A generic architecture for wafer-scale neuromorphic systems" * Figures 4,5,10; page 502, ligne 38 - page 504, ligne 4; page 511, ligne 1 - page 512, ligne 29 * | 1-5 | DOMAINES TECHNIQUES RECHERCHES (Int. Cl.5) |
| Y | US-A-4 729 111  (ARRATHOON) * Figures 1-3; abrégé * | 6 | G 06 F   15 G 06 G    7 |
| Y | IEEE JOURNAL OF SOLID-STATE CIRCUITS, vol. 23, no. 3, juin 1988, pages 688-697, IEEE, New York, US; A.F. MURRAY et al.: "Asynchronous VLSI neural networks using pulse-stream arithmetic" * Figures 2-7; page 693, colonne de gauche, ligne 10 - page 695, colonne de gauche, ligne 7 * | 7 | |

Le présent rapport a été établi pour toutes les revendications

| Lieu de la recherche | Date d'achèvement de la recherche | Examinateur |
|---|---|---|
| LA HAYE | 05-03-1991 | SCHENKELS P.F. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant

EPO FORM 1503 03.82 (P0402)